# EUROPÄISCHE PATENTSCHRIFT

(11) **EP 1 328 393 B1**
(45) Veröffentlichungstag und Bekanntmachung des Hinweises auf die Patenterteilung: **08.12.2004**
(21) Anmeldenummer: 01987710.9
(22) Anmeldetag: 17.10.2001
(51) Int. Cl.: B29C 45/76, G05B 19/4069

(54) **SPRITZGIESSEINRICHTUNG MIT MINDESTENS ZWEI STEUERUNGEN**
INJECTION MOLDING DEVICE WITH AT LEAST TWO CONTROLS
PRESSE D'INJECTION PRESENTANT AU MOINS DEUX UNITES DE COMMANDE

(30) Priorität: 18.10.2000 DE 10052996
(43) Veröffentlichungstag der Anmeldung: 23.07.2003
(73) Patentinhaber: Demag Ergotech GmbH, 90571 Schwaig (DE)
(72) Erfinder: DACHS, Oswald, 90542 Eckental (DE); MELKUS, Andreas, A-5020 Salzburg (AT); WARNECKE, Gerd, 06618 Naumburg (DE)
(74) Vertreter: Meissner, Peter E., Dipl.-Ing.
(86) Internationale Anmeldenummer: PCT/DE2001/003958
(87) Internationale Veröffentlichungsnummer: WO 2002/032649

(56) Entgegenhaltungen:
- EP-A- 0 199 823
- WO-A-87/06730
- US-A- 5 520 528
- PATENT ABSTRACTS OF JAPAN vol. 1998, no. 14, 31. Dezember 1998 (1998-12-31) -& JP 10 249904 A (OMRON CORP), 22. September 1998 (1998-09-22)
- PATENT ABSTRACTS OF JAPAN vol. 2000, no. 25, 12. April 2001 (2001-04-12) -& JP 2001 219456 A (TOSHIBA MACH CO LTD), 14. August 2001 (2001-08-14)
- PATENT ABSTRACTS OF JAPAN vol. 2000, no. 08, 6. Oktober 2000 (2000-10-06) -& JP 2000 141019 A (TOYO MACH &METAL CO LTD), 23. Mai 2000 (2000-05-23)
- PATENT ABSTRACTS OF JAPAN vol. 009, no. 004 (E-288), 10. Januar 1985 (1985-01-10) -& JP 59 153481 A (HITACHI SEISAKUSHO KK), 1. September 1984 (1984-09-01)

## Beschreibung

Die Erfindung betrifft eine Spritzgießeinrichtung, insbesondere für Kunststoffe, mit mindestens zwei Steuerungen, die über Datensichtleitungen an Datensichtgeräte angeschlossen sind.

Aus EP 0 199 823 B1 ist eine eine Anzeigeeinheit einer Einspritzgießmaschine umfassend Kontrollvorrichtung bekannt, die verschiedene Zustände der Maschine auf einem Bildschirm einer Anzeigeeinheit anzeigt. Es werden ausschließlich Daten der einzigen mit der Anzeigeeinheit verbundenen Einspritzgießmaschine verarbeitet.

Aus WO 00/08606 ist eine Spritzgießmaschine mit einer Bedieneinrichtung bekannt, die einen Kontaktbildschirm aufweist, an dem eine ein Identifikationscode berührungslos empfangene Empfangseinrichtung zugeordnet ist.

Dieser Kontaktbitdschirm (Touch Screen) ist mit einer einzigen Spritzgießmaschine verbunden.

Bei bisher bekannten Konfigurationen an Spritzgießmaschinen, wo zusätzlich zur Maschinensteuerung noch erweiterte Peripherie-Steuerungen zusammengeschlossen sind, verfügt jede Steuerung über jeweils ein zugeordnetes Datensichtgerät. Neben dem hohen Platzbedarf der Einzeldatensichtgeräte stellt es für den Bedienungsmann eine hohe Belastung dar, die aktuelle Anzeige aller wichtigen Daten der einzelnen Maschinen zentriert zu erfassen.

Der Erfindung liegt daher die Aufgabe zugrunde, eine Vorrichtung und ein Verfahren zu schaffen, welches sicher, übersichtlich und von besonderem Bedienkomfort die Eingabe und die Überwachung von Einstelldaten an Steuerungen von Spritzgießmaschinen gewährleistet.

Die Erfindung erreicht dieses Ziel durch die Merkmale des Vorrichtungsanspruchs 1.

Erfindungsgemäß weisen die einzelnen Datensichtleitungen steuerbare Schalter auf, die über eine Steuereinrichtung steuerbar sind. Im geschlossenen Zustand werden die individuellen Steuerungsdaten auf einem zentralen Datensichtgerät angezeigt. Neben der Maschinensteuerung werden bei Spritzgießmaschinen Peripherie-Steuerungen wie die der Handlinggeräte, Heisskanaleinrichtung, Temperiergeräte u.ä. Einheiten in die Eingabe und Überwachung der Einstelldaten einbezogen.

Die Reduzierung auf nur ein Datensichtgerät mit der Auswahl der angezeigten Daten aus den verschiedenen Steuerungen bringt eine bisher nicht anzutreffende Übersichtlichkeit, einen besonderen Bedienkomfort und eine besonders hohe Sicherheit bei der Bedienung von Spritzgießmaschinen.

Weiterhin ist durch diese Art und Weise der Ausgestaltung der Programmierer für eine Vernetzung nicht mehr notwendig. Dies gilt insbesondere bei immer wieder auftretenden Erweiterungen durch zusätzliche Schnittstellen, die ohne großen Aufwand leicht durchführbar sind.

In einer vorteilhaften Weiterbildung der Erfindung wird vorgeschlagen, das Ansprechen der einzelnen Rechner und Abrufen der entsprechenden Daten über einen Touch-Screen-Bildschirm durchzuführen. Nach der Berührung des Bildschirms geht dieser Befehl an den entsprechenden Hardware-Schalter, der die Datensichtleitungen mit dem aufgerufenen Rechner verbindet.

In einer weiteren vorteilhaften Ausgestaltung ist an das Datensichtgerät ein Drucker angeschlossen. Dieser Drucker besitzt einen Speicher zur schnellen Aufnahme von ausgewählten Daten. Diese einzelnen Daten können zu gegebener Zeit unabhängig vom Datensichtgerät aufbereitet und ausgedruckt werden.

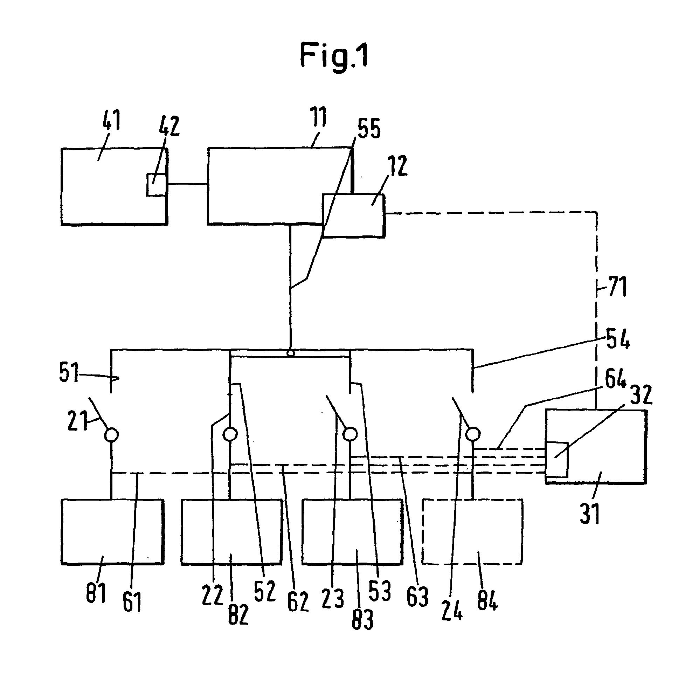

Ein Beispiel der Erfindung ist in der beigefügten Zeichnung dargelegt. Dabei zeigt die Figur 1 ein Datensichtgerät 11, dass über eine Datenleitung 71 mit einer Steuereinrichtung 31 verbunden ist. im vorliegenden Fall weist das Datensichtgerät eine Touch-Screen-Funktionseinheit 12 auf.

Die Steuereinrichtung 31 besitzt ein Steuerelement 32, welches über Steuerleitungen 61-64 mit Schaltern 21-23 sowie einer möglichen Schaltererweiterung bzw. einem Resenreschalter 24 verbunden sind.

Die Schalter 21-24 sind in Datensichtleitungen 51-54 angeordnet, die einenends mit einer Maschinensteuerung 81, einer Heisskanalsteuerung 82, einer Heisskanalsteuerung 83 und einer Temperiergerätsteuerung 84 und anderenends mit einer Datenhauptleitung 55 verbunden sind. Die Datenhauptleitung 55 steht in unmittelbarer Verbindung mit dem Datensichtgerät 11.

An das Datensichtgerät 11 ist ein Drucker 41 angeschlossen, der eine Speichereinheit 42 aufweist, in der die später zu druckenden Daten gespeichert werden.

### Positionsliste

### Datenanzeige

- 11: Datensichtgerät
- 12: Touch-Screen-Funktionseinheit

### Schaltereinheiten

- 21-23: Schalter
- 24: Reserveschalter

### Steuern

- 31: Steuereinrichtung
- 32: Steuerelement

### Dokumentation

- 41: Drucker
- 42: Speichereinheit

### Kraftleitungen

- 51-54: Datensichtleitung
- 55: Datenhauptleitung

### Steuern

- 61-64: Steuerleitungen

### Verbindungseinheit

- 71: Datenleitung

### Steuerungen

- 81: Maschinensteuerung
- 82: Heisskanalsteuerung
- 83: Heisskanalsteuerung
- 84: Temperiergerätsteuerung

## Patentansprüche

1. Spritzgießeinrichtung, insbesondere für Kunststoffe, mit mindestens zwei Steuerungen, die über Datensichtleitungen an Datensichtgeräte angeschlossen sind,
**dadurch gekennzeichnet,**
**dass** die einzelnen Datensichtleitungen (51-53) steuerbare Schalter (21-23) aufweisen,
**dass** eine Steuereinrichtung (31) zur Steuerung der Schalter (21-23) vorgesehen ist, und
**dass** die Schalter (21-23) in geschlossenem Zustand mit einer Datenhauptleitung (55) verbunden sind, die zu einem gemeinsamen Datensichtgerät (11) führen.

2. Spritzgießeinrichtung nach Anspruch 1,
**dadurch gekennzeichnet,**
**dass** das Datensichtgerät (11) ein Bildschirm ist, der eine Touch-Screen-Funktionseinheit (12) aufweist, mit der die Schalter (21-23) steuerbar sind.

3. Spritzgießeinrichtung nach Anspruch 1,
**dadurch gekennzeichnet,**
**dass** die Steuereinrichtung (31) in der Weise aufgebaut ist, dass eine spätere Erweiterung durch mindestens einen zusätzlichen Schalter (24) möglich ist.

4. Spritzgießeinrichtung nach einem der vorgenannten Ansprüche,
**dadurch gekennzeichnet,**
**dass** die Steuereinrichtung (31) Elemente (32) aufweist, die über mit den Schaltern (21-24) verbundene Steuerleitung (61-64) eine definierte Zuordnung der Steuerungen zum Datensichtgerät (11) gewährleistet.

5. Spritzgießeinrichtung nach Anspruch 1,
**dadurch gekennzeichnet,**
**dass** an das Datensichtgerät (11) ein Drucker (41) anschließbar ist, der eine Speichereinheit (42) zur definierten Aufnahme von Daten besitzt.

## Claims

1. An injection-moulding device, in particular for plastics, comprising at least two control devices which are connected via data display lines to data display modules,
**characterised in that**
the individual data display lines (51-53) have controllable switches (21-23),
that one control means (31) is provided for controlling the switches (21-23), and that the switches (21-23) in the closed state are connected to a main data line (55) which leads to a common data display module (11).

2. An injection-moulding device according to Claim 1, **characterised in that** the data display module (11) is a screen which has a touch-screen functional unit (12) by means of which the switches (21-23) can be controlled.

3. An injection-moulding device according to Claim 1, **characterised in that** the control means (31) is constructed such that later extension by adding at least one additional switch (24) is possible.

4. An injection-moulding device according to one of the preceding claims, **characterised in that** the control means (31) comprises elements (32) which ensures a defined assignment of the control devices to the data display module (11) via control lines (61-64) connected to the switches (21-24).

5. An injection-moulding device according to Claim 1, **characterised in that** a printer (41) which has a memory unit (42) for the defined recording of data can be connected to the data display module (11).

## Revendications

1. Dispositif de moulage par injection, notamment pour des matières plastiques, comportant au moins deux commandes qui sont reliées à des dispositifs de visualisation par l'intermédiaire de lignes d'affichage de données,
**caractérisé en ce que** les différentes lignes d'affichage de données (51 à 53) comportent des commutateurs pouvant être commandés (21 à 23),
**en ce qu'**il est prévu un dispositif de commande (31) servant à commander les commutateurs (21 à 23), et
**en ce que**, à l'état fermé, les commutateurs (21 à 23) sont reliés à une ligne de données principale (55) qui mène à un dispositif de visualisation commun (11).

2. Dispositif de moulage par injection selon la revendication 1,
**caractérisé en ce que** le dispositif de visualisation (11) est un écran qui comporte une unité fonctionnelle formant écran tactile (12) au moyen de laquelle les commutateurs (21 à 23) peuvent être commandés.

3. Dispositif de moulage par injection selon la revendication 1,
**caractérisé en ce que** le dispositif de commande (31) est construit de telle manière qu'une extension ultérieure est possible grâce à au moins un commutateur supplémentaire (24).

4. Dispositif de moulage par injection selon l'une des revendications précédentes,
**caractérisé en ce que** le dispositif de commande (31) comporte des éléments (32) qui assurent une relation définie des commandes avec le dispositif de visualisation (11) par l'intermédiaire de la ligne de commande (61 à 64) reliée aux commutateurs (21 à 24).

5. Dispositif de moulage par injection selon la revendication 1,
**caractérisé en ce qu'**une imprimante (41) comportant une unité formant mémoire (42) qui sert à enregistrer des données de manière définie peut être reliée au dispositif de visualisation (11).
